(19) Europäisches Patentamt
European Patent Office
Office européen des brevets

(11) **EP 3 247 580 B1**

(12) **FASCICULE DE BREVET EUROPEEN**

(45) Date de publication et mention de la délivrance du brevet:
**10.04.2019 Bulletin 2019/15**

(51) Int Cl.:
***B60H 3/02*** *(2006.01)*   ***F24F 6/14*** *(2006.01)*

(21) Numéro de dépôt: **16700829.1**

(22) Date de dépôt: **18.01.2016**

(86) Numéro de dépôt international:
**PCT/EP2016/050854**

(87) Numéro de publication internationale:
**WO 2016/116386 (28.07.2016 Gazette 2016/30)**

(54) **DISPOSITIF DE RAFRAICHISSEMENT D'AIR PAR NEBULISATION POUR VEHICULE AUTOMOBILE**

VORRICHTUNG ZUR LUFTERFRISCHUNG DURCH ZERSTÄUBUNG FÜR EIN KRAFTFAHRZEUG

DEVICE FOR FRESHENING AIR BY ATOMIZATION FOR A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.01.2015 FR 1550529**

(43) Date de publication de la demande:
**29.11.2017 Bulletin 2017/48**

(73) Titulaire: **Valeo Systemes Thermiques**
**78320 Le Mesnil Saint Denis (FR)**

(72) Inventeur: **FOURNIER, Jonathan**
**78160 Le Perray-en-Yvelines (FR)**

(74) Mandataire: **Metz, Gaëlle**
**Valeo Systèmes Thermiques**
**8, rue Louis Lormand**
**CS 80517 La Verrière**
**78322 Le Mesnil Saint Denis Cedex (FR)**

(56) Documents cités:
**WO-A1-2012/049390    DE-A1- 2 952 444**
**JP-A- 2002 122 339    JP-A- 2003 117 555**

## Description

DOMAINE TECHNIQUE DE L'INVENTION

La présente invention concerne un dispositif de rafraîchissement d'air par nébulisation pour véhicule automobile.

Elle trouve une application particulière mais non limitative dans les véhicules automobiles.

ARRIÈRE-PLAN TECHNOLOGIQUE DE L'INVENTION

De plus en plus de véhicules automobiles comprennent un dispositif de rafraîchissement d'air par nébulisation qui permet d'envoyer des fines gouttelettes de liquide dans l'habitacle du véhicule automobile pour le rafraîchir.
Un tel dispositif de rafraîchissement d'air offre ainsi une fonctionnalité de confort qui permet notamment d'éviter que les yeux du conducteur et des passagers du véhicule automobile ne se dessèchent. Un dispositif de rafraîchissement d'air connu de l'homme du métier comprend une unité de nébulisation qui contient un liquide de nébulisation et un nébuliseur couplé à ladite unité de nébulisation. A partir du liquide de nébulisation, le nébuliseur génère une brume composée de fines gouttelettes. Un dispositif de rafraîchissement de l'air par nébulisation suivant les caractéristiques du préambule de la revendication 1 est connu du document JP 2003 117555 A.

Un inconvénient de cet état de la technique est que si la qualité du liquide de nébulisation se dégrade, on rafraîchit l'habitacle du véhicule automobile avec un liquide pouvant comprendre des matières biologiques dont l'inhalation n'est pas souhaitable et/ou susceptibles de produire des odeurs désagréables.

Dans ce contexte, la présente invention vise à résoudre l'inconvénient précédemment mentionné.

DESCRIPTION GENERALE DE L'INVENTION

A cette fin l'invention propose un dispositif de rafraîchissement d'air par nébulisation pour véhicule automobile, selon lequel le dispositif de rafraîchissement d'air comprend :

- une unité de nébulisation adaptée pour recevoir un liquide de nébulisation ;
- un nébuliseur couplé à ladite unité de nébulisation ;
- une cellule de conductivité comprenant deux électrodes disposées dans ladite unité de nébulisation et permettant une mesure d'impédance ;
- un double demi-pont en H composé d'une pluralité de transistors et relié à ladite cellule de conductivité, ledit double demi-pont en H étant adapté pour alimenter ladite cellule de conductivité avec un courant d'alimentation alternatif ; et
- un amplificateur opérationnel relié audit double demi-pont en H et comportant une tension d'entrée, ledit amplificateur opérationnel étant adapté pour fournir une tension de sortie fonction de ladite tension d'entrée et de ladite impédance.

Ainsi, comme on va le voir en détail ci-après, la cellule de conductivité ensemble le double demi-pont en H et l'amplificateur opérationnel permettent de mesurer une impédance du liquide de nébulisation via la tension de sortie de l'amplificateur opérationnel et d'en déduire la conductivité du liquide de nébulisation. En fonction de la valeur la conductivité, on vérifie la qualité du liquide de nébulisation mais également l'absence ou la présence de liquide de nébulisation dans l'unité de nébulisation. Si la qualité du liquide de nébulisation s'est dégradée ou si tout le liquide de nébulisation a été utilisé, on peut alors stopper la nébulisation.

Selon des modes de réalisation non limitatifs, le dispositif de rafraîchissement d'air par nébulisation, peut comporter en outre une ou plusieurs caractéristiques supplémentaires parmi les suivantes :
Selon un mode de réalisation non limitatif, l'impédance est une impédance du liquide de nébulisation et la tension de sortie est représentative d'une conductivité dudit liquide de nébulisation.

Selon un autre mode de réalisation non limitatif, l'impédance tend vers l'infini et la tension de sortie est représentative de l'absence de liquide de nébulisation dans ladite unité de nébulisation.

Selon un mode de réalisation non limitatif, les transistors du double demi-pont en H sont pilotés avec une tension de commande et comportent une tension seuil, et ladite tension d'entrée est inférieure à ladite tension de commande moins ladite tension seuil.
Cela permet aux transistors du double demi-pont de se fermer correctement.

Selon un mode de réalisation non limitatif, ladite tension d'entrée est inférieure à 1,3 Volts.
Cela permet de diminuer l'effet capacitif du liquide de nébulisation.

Selon un mode de réalisation non limitatif, la tension de commande des transistors est comprise entre 3,3 Volts et 12 Volts.
Cela permet d'utiliser des composants couramment présents sur le marché.

Selon une variante de réalisation non limitative, la tension de commande est égale à 3,3 Volts.
Cela permet d'utiliser des composants couramment présents sur le marché.

Selon un mode de réalisation non limitatif, les transistors du double demi-pont en H sont des transistors MOSFET.

Cela permet d'utiliser des transistors couramment présents sur le marché et peu coûteux.

Selon un mode de réalisation non limitatif, ledit dispositif de rafraîchissement d'air comprend en outre en sortie dudit amplificateur opérationnel un comparateur de tension adapté pour comparer la tension de sortie dudit amplificateur opérationnel avec :

- ladite tension d'entrée ; et/ou
- une tension seuil correspondant à une conductivité déterminée du liquide de nébulisation.

Le comparateur de tension va permettre de tester la présence/l'absence de liquide de nébulisation, et la qualité du liquide de nébulisation.

Selon une variante de réalisation non limitative, ledit dispositif de rafraîchissement d'air par nébulisation est adapté pour arrêter la nébulisation du liquide de nébulisation :

- si la tension de sortie est inférieure ou égale à la tension de référence ; ou
- si la tension de sortie est supérieure à la tension seuil correspondant à la conductivité déterminée du liquide de nébulisation.

Ainsi, on arrête de diffuser de fines gouttelettes dans l'habitacle du véhicule automobile s'il n'y a plus de liquide de nébulisation ou si ledit liquide de nébulisation est de mauvaise qualité.

Selon une variante de réalisation non limitative, en fonction du résultat de la comparaison, le dispositif de rafraîchissement d'air par nébulisation est adapté pour redémarrer la nébulisation de liquide de nébulisation :

- en présence du liquide de nébulisation; et
- si le liquide de nébulisation comporte une conductivité inférieure à la conductivité déterminée.

Selon un mode de réalisation non limitatif, la conductivité déterminée est supérieure à 1000 $\mu$S/cm. Au-delà de ce seuil de conductivité, le liquide de nébulisation est considéré comme n'étant pas d'assez bonne qualité pour être utilisé.

Selon un mode de réalisation non limitatif, ledit comparateur de tension est un comparateur à hystérésis. Cela permet d'éviter que le dispositif de rafraîchissement effectue une action qui oscille entre l'arrêt de la nébulisation ou la nébulisation du liquide de nébulisation lorsque la tension de sortie de l'amplificateur opérationnel oscille autour d'une valeur seuil correspondant à une conductivité relative à un liquide de nébulisation de mauvaise qualité.

Selon un mode de réalisation non limitatif, ledit dispositif de rafraîchissement d'air comprend en outre en sortie dudit amplificateur opérationnel un condensateur adapté pour lisser la tension de sortie dudit amplificateur opérationnel.

Cela évite d'échantillonner la mesure de la tension de sortie de l'amplificateur opérationnel.

Selon un mode de réalisation non limitatif, ledit dispositif de rafraîchissement d'air comprend en outre un capteur de température disposé aux bornes des deux électrodes de ladite cellule de conductivité et adapté pour fournir une température réelle du liquide de nébulisation.

La conductivité varie en fonction de la température. Le capteur de température permet de mesurer la température du liquide de nébulisation. La mesure de conductivité est corrigée par la suite en fonction d'une température de référence.

Selon un mode de réalisation non limitatif, ladite unité de nébulisation est :

- un réservoir de nébulisation ; ou
- un conduit de nébulisation dans lequel le liquide de nébulisation peut s'écouler.

BREVE DESCRIPTION DES FIGURES

L'invention et ses différentes applications seront mieux comprises à la lecture de la description qui suit et à l'examen des figures qui l'accompagnent.

- la figure 1 représente un premier schéma d'un dispositif de rafraîchissement d'air par nébulisation pour un véhicule automobile, ledit dispositif comprenant une unité de nébulisation, un nébuliseur, une cellule de conductivité, un double demi-pont en H et un amplificateur opérationnel, selon un mode de réalisation non limitatif de l'invention ;
- la figure 2 représente un schéma du nébuliseur et de la cellule de conductivité plongés dans l'unité de nébulisation du dispositif de rafraîchissement d'air par nébulisation de la figure 1, selon un mode de réalisation non limitatif de l'invention ;
- la figure 3 représente un premier schéma du double demi-pont en H du dispositif de rafraîchissement d'air par nébulisation de la figure 1, selon un premier mode de fonctionnement ;
- la figure 4 représente un deuxième schéma du double demi-pont en H du dispositif de rafraîchissement d'air par nébulisation de la figure 1, selon un deuxième mode de fonctionnement ;
- la figure 5 représente un diagramme de fermeture et d'ouverture des différents transistors composant le double demi-pont en H de la figure 1, selon un mode de réalisation non limitatif ;
- la figure 6 représente un deuxième schéma d'un dispositif de rafraîchissement d'air par nébulisation pour un véhicule automobile de la figure 1, ledit dispositif comprenant en outre un condensateur et un comparateur de tension, selon un mode de réalisation non limitatif de l'invention ;
- la figure 7 représente le diagramme de fermeture et d'ouverture des différents transistors composant le double demi-pont en H de la figure 5 avec en complément l'évolution de la tension de sortie de l'amplificateur opérationnel du dispositif de rafraîchissement d'air par nébulisation, en l'absence et en présence d'un condensateur en sortie dudit amplificateur opérationnel ; et
- la figure 8 représente un troisième schéma d'un dispositif de rafraîchissement d'air par nébulisation pour un véhicule automobile de la figure 1, ledit dispositif comprenant en outre un capteur de température, selon un mode de réalisation non limitatif de l'invention.

DESCRIPTION DE MODES DE REALISATION DE L'INVENTION

Les éléments identiques, par structure ou par fonction, apparaissant sur différentes figures conservent, sauf précision contraire, les mêmes références.

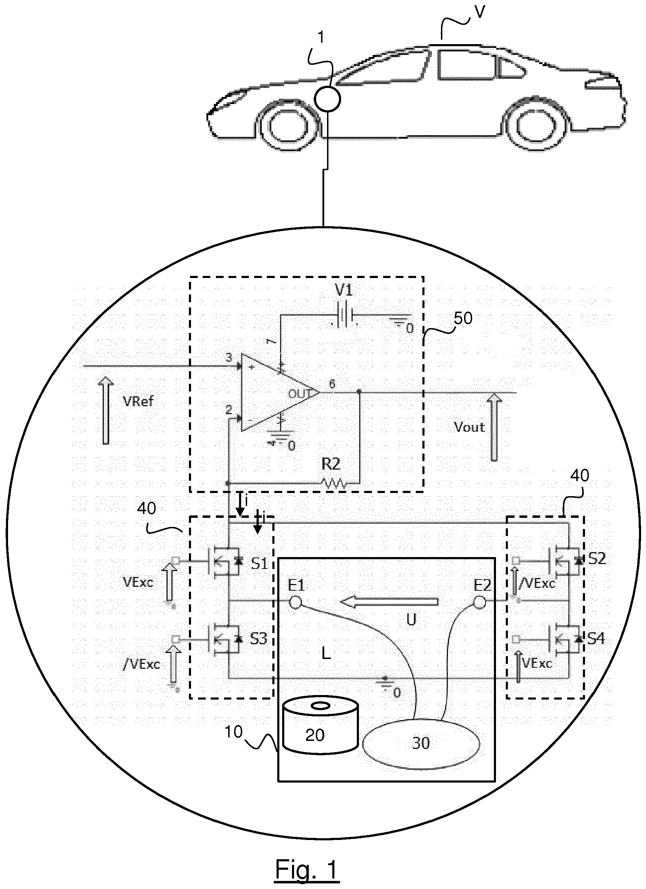

Le dispositif de rafraîchissement d'air par nébulisation 1 pour véhicule automobile V, est illustré schématiquement sur la figure 1.

Par véhicule automobile, on entend tout type de véhicule motorisé.

Le dispositif de rafraîchissement d'air par nébulisation 1 comprend :

- une unité de nébulisation 10 adaptée pour recevoir un liquide de nébulisation L ;
- un nébuliseur 20 couplé à ladite unité de nébulisation 10 ;
- une cellule de conductivité 30 comprenant deux électrodes E1, E2 disposées dans ladite unité de nébulisation 10 et permettant une mesure d'impédance R1 ;
- un double demi-pont en H 40 composé d'une pluralité de transistors S1, S2, S3, S4 et relié à ladite cellule de conductivité 30, ledit double demi-pont en H 40 étant adapté pour alimenter ladite cellule de conductivité 30 avec un courant d'alimentation i alternatif ; et
- un amplificateur opérationnel 50 relié audit double demi-pont en H 40 et comprenant une tension d'entrée Vref, ledit amplificateur opérationnel 50 étant adapté pour fournir une tension de sortie Vout fonction de ladite tension d'entrée Vref et de ladite impédance R1.

Dans la suite de la description, la tension d'entrée Vref est également appelée tension de référence. Les différents éléments du dispositif de rafraîchissement d'air par nébulisation 1 sont décrits plus en détail ci-après.

• Unité de nébulisation et nébuliseur

Dans des modes de réalisation non limitatifs, l'unité de nébulisation 10 est :

- un réservoir de nébulisation ; ou
- un conduit de nébulisation dans lequel le liquide de nébulisation L peut s'écouler.

Le nébuliseur 20 est plongé dans ladite unité de nébulisation 10.

Dans un exemple non limitatif, le liquide de nébulisation L est de l'eau.

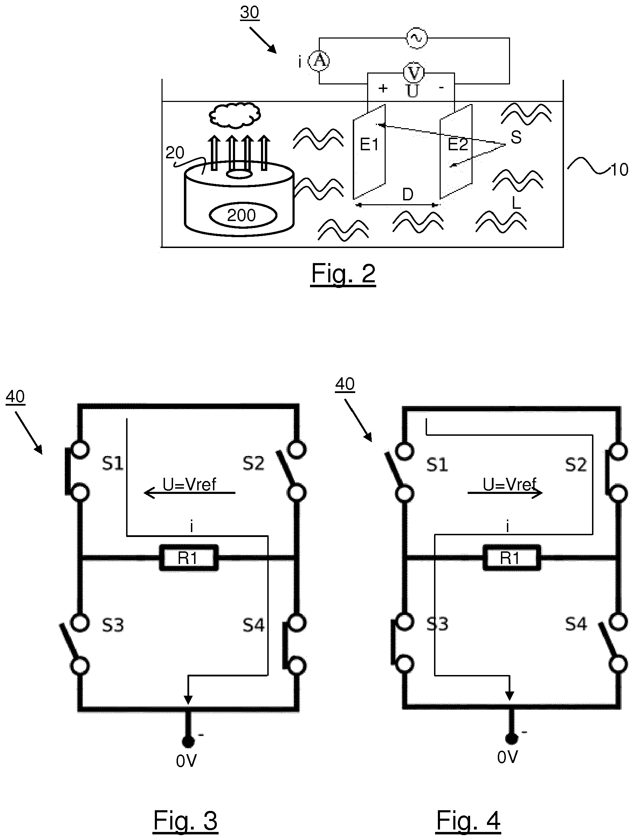

Dans un mode de réalisation non limitatif, le nébuliseur 20 est un nébuliseur à ultrasons qui comprend un oscillateur piézo-électrique 200 tel qu'illustré sur la figure 2. Le nébuliseur à ultrasons 20 fonctionne à une fréquence d'environ 2MHz dans un exemple non limitatif. Le nébuliseur 20 permet la nébulisation du liquide de nébulisation L : l'oscillateur piézo-électrique 200, qui est un élément vibrant, produit de fines gouttelettes de liquide à partir du liquide de nébulisation. Il est immergé dans l'unité de nébulisation 10 et est alimenté par un courant basse tension. Les fines gouttelettes de liquide produites sont acheminées via au moins un conduit d'acheminement (non illustré) et diffusées via un diffuseur (non illustré) dans l'habitacle du véhicule automobile V.

• Cellule de conductivité

La cellule de conductivité 30 est illustrée plus en détail sur la figure 2. Les deux électrodes E1 et E2 de la cellule de conductivité sont des plaques parallèles entre elles et séparées l'une de l'autre par une distance D. Elles ont une surface S. Dans un exemple non limitatif, les plaques E1 et E2 sont en platine.

Comme on va le voir ci-après, la cellule de conductivité 30 permet une mesure de l'impédance R1 du liquide de nébulisation L et par conséquent permet de déterminer sa conductivité $\sigma$ (en siemens par centimètre (S/cm)). La cellule de conductivité 30 permet de déterminer également la résistivité $\rho$ en ohms par centimètre ($\Omega$.cm) du liquide de nébulisation L, résistivité qui est l'inverse de la conductivité $\sigma$.

Dans des mesures sur un liquide de nébulisation L très pur où la conductivité $\sigma$ est extrêmement faible, on peut mesurer à la place la résistivité $\rho$.

De manière générale, la conductivité $\sigma$ est la capacité d'une solution à faire passer un courant électrique. Dans une solution, les anions et les cations transportent le courant. Les cations migrent en direction de l'électrode négative, et les anions migrent en direction de l'électrode positive. La solution se comporte alors comme un conducteur électrique.

La conductivité $\sigma$ se mesure en appliquant un courant alternatif i aux deux électrodes E1, E2 immergées dans le liquide de nébulisation L.

On détermine la conductivité $\sigma$ du liquide de nébulisation L en mesurant son impédance R1 en ohms ($\Omega$) ou sa conductance G en siemens (S) qui est l'inverse de l'impédance R1.

Ainsi, comme illustrée sur la Fig. 2, on peut à l'aide de la cellule de conductivité 30, d'un générateur de tension V et d'un ampèremètre A branché en série, déduire l'impédance R1 du liquide de nébulisation à l'aide de la loi d'Ohm :

$U=R1.i$ avec U, la tension appliquée aux bornes de la cellule de conductivité 30, en volts (V), $R1$ en ohms ($\Omega$), i en ampères (A).

Dans un exemple non limitatif, l'électrode E1 est une anode et est donc reliée au pôle + du générateur V, et l'électrode E2 est une cathode et est donc reliée au pôle - du générateur de tension V.

On a la formule suivante :

$$\sigma . R1 = \frac{D}{S}$$

avec *S* en centimètre carré (cm²), D en centimètre (cm) et σ en siemens par centimètre (S/cm).
La conductivité σ est caractéristique du liquide de nébulisation L et est donc fonction de l'impédance R1 et d'une constante géométrique K (cm⁻¹) de la cellule de conductivité 30, appelé coefficient de conductivité avec :

$$K = \frac{D}{S}$$

Dans des exemples non limitatifs, à 25°C, la conductivité σ est égale à :

- 0,05 μS/cm pour une solution la plus pure ;
- 1 μS/cm pour une eau déionisée ;
- entre 10 μS/cm et 100 μS/cm pour une eau distillée ;
- 50 μS/cm pour une eau de pluie ;
- entre 50 μS/cm et 1000 μS/cm pour une eau potable ;
- 5 mS/cm pour une eau de rejet industriel ;
- 50 mS/cm pour une eau de mer ;

La conductivité σ mesure la concentration d'ions dans une solution, ici le liquide de nébulisation L. Plus il y a d'ions, plus la conductivité σ est élevée, et plus la solution est polluée. Cela signifie qu'il y a notamment un taux élevé de sels et d'acides.
Autrement dit, plus l'impédance R1 est petite et plus le liquide de nébulisation est pollué. Par contre, plus l'impédance R1 est grande et plus le liquide de nébulisation est propre et tend vers la pureté.

On notera qu'en l'absence de liquide de nébulisation L, l'impédance R1 de la cellule de conductivité est égale à l'infini.

• Double demi-pont en H

Tel qu'illustré sur les figures 1, 3, 4, 6 et 8, dans un exemple non limitatif, le double demi-pont en H comprend deux demi-ponts chacun comprenant deux transistors S1-S4 et S2-S3.
Les transistors S1 à S4 sont pilotés avec une tension de commande Vexe et comportent une tension seuil Vgs.
Dans un mode de réalisation non limitatif, les transistors S1, S2, S3, S4 du double demi-pont en H 40 sont des transistors MOSFET. Dans ce cas, la tension seuil Vgs est la tension grille-source des transistors MOSFET.

Le double demi-pont en H 40 est relié à la cellule de conductivité 30 et permet d'alimenter ladite cellule de conductivité 30 avec un courant alternatif i.

Sans la présence du double demi-pont en H 40, si on utilise uniquement un pont diviseur simple pour appliquer la tension U à la cellule de conductivité 30, une électrolyse se produit dans le liquide de nébulisation L. Ce dernier va se charger et la mesure de la conductivité va faire apparaître une impédance R1 très forte qui tend vers l'infini et qui n'est pas représentative de la réelle impédance du liquide de nébulisation L et donc de la conductivité σ dudit liquide L.
Le double demi-pont en H 40 permet d'inverser le courant i circulant dans la cellule de conductivité 30 afin d'éviter de charger de façon capacitive ledit liquide de nébulisation L. Ainsi, il permet d'alimenter la cellule de conductivité avec un courant alternatif i. En conséquence, on peut mesurer la réelle impédance R1 du liquide de nébulisation L représentative de la conductivité σ dudit liquide.

La figure 3 représente le double demi-pont en H 40 selon un premier mode de fonctionnement dans lequel les transistors S1 et S4 sont fermés et les transistors S2 et S3 sont ouverts. A ce moment, le courant d'alimentation i circule dans la cellule de conductivité 30 représentée par l'impédance R1 sur la figure 3 dans un premier sens. La tension U qui alimente la cellule de conductivité est également représentée sur le schéma. Elle est dans le sens opposé au courant d'alimentation i.

La figure 4 représente le double demi-pont en H 40 selon un deuxième mode de fonctionnement dans lequel les transistors S1 et S4 sont ouverts et les transistors S2 et S3 sont fermés. A ce moment, le courant d'alimentation i circule dans la cellule de conductivité 30 représentée par l'impédance R1 sur la figure 4 dans un deuxième sens qui est l'inverse du premier sens de la figure 3. La tension U qui alimente la cellule de conductivité est également représentée sur le schéma. Elle est dans le sens opposé au courant d'alimentation i.

Dans un mode de réalisation non limitatif, dans le cas de transistors MOSFET, ladite tension de référence Vref est inférieure à ladite tension de commande VExc moins ladite tension seuil Vgs (Vref<VExc-Vgs). Cela permet aux transistors S1-S4 et S2-S3 de se fermer correctement.

On notera que l'effet capacitif du liquide de nébulisation L est proportionnel à la tension de référence Vref. En conséquence, la tension de référence Vref doit être suffisamment petite pour ne pas générer d'électrolyse dans le liquide de nébulisation L.
Dans un mode de réalisation non limitatif, ladite tension de référence Vref est inférieure à 1,3 Volts. Cela permet de diminuer l'effet capacitif du liquide de nébulisation L.

Dans un mode de réalisation non limitatif, la tension de commande VExc est comprise entre 3,3 Volts et 12 Volts.
Dans une variante de réalisation non limitative, la tension de commande VExc est égale à 3,3Volts.

Dans ce cas, lorsque le transistor S1 est fermé par exemple, la tension seuil Vgs est égale à VExc-Vref=3,3V-1,3V=2 Volts. Une telle valeur de tension permet au transistor S1 de bien se fermer et donc d'être dans un état bien passant.

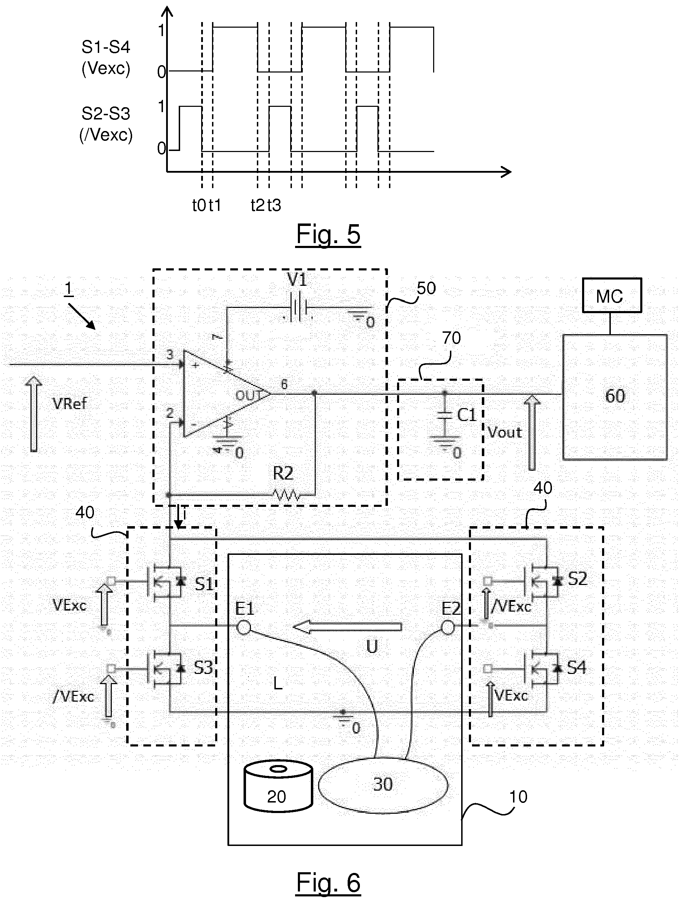

Afin de s'assurer que les transistors S1-S4 et S2-S3 ne se ferment pas en même temps, dans un mode de réalisation non limitatif, les transistors S1-S4 et S2-S3 du double demi-pont en H 40 qui sont pilotés avec des tensions de commande Vexc et /VExc complémentaires l'une de l'autre, sont pilotés en modulation de fréquence pour obtenir un décalage entre la fermeture (état égal à 1 sur la figure 5) des transistors S1-S4 et la fermeture (état égal à 1 sur la figure 5) des transistors S2-S3, tel qu'illustré sur la figure 5.

On a ainsi des intervalles de temps t0-t1 et t2-t3 dans lesquels les quatre transistors S1-S2-S3-S4 sont ouverts (état égal à 0 sur la figure 5).

Ainsi, dans l'exemple non limitatif illustré sur la figure 5, au temps t0, alors que les transistors S2-S3 s'ouvrent, les transistors S1-S4 ne se ferment pas encore. Ce n'est que lorsque les transistors S2-S3 sont complètement ouverts (état bloqué) au temps t1 que les transistors S1-S4 se ferment (passent dans un état passant).

On notera que si les transistors S1-S4 et S2-S3 se ferment tous en même temps, on obtient R1=0 et Vout = V1 (selon la formule de la tension de sortie Vout de l'amplificateur opérationnel 50 décrite plus loin). En conséquence, on obtient une mesure de la tension de sortie Vout non représentative de la conductivité σ du liquide de nébulisation L.

Comme l'effet capacitif du liquide de nébulisation L change en fonction de la conductivité du liquide de nébulisation, dans un mode de réalisation non limitatif, les transistors S1, S2, S3, S4 du double demi-pont en H 40 sont pilotés en modulation de fréquence en fonction de la conductivité σ du liquide de nébulisation L. La fréquence de pilotage est ainsi fixée en fonction du liquide de nébulisation L qui est utilisé au départ dans l'unité de nébulisation 10 et n'est pas fixée en fonction de la dégradation dudit liquide de nébulisation L au cours du temps.

Dans des exemples non limitatifs :

- la fréquence de pilotage est égale à 5kHz lorsque le liquide de nébulisation L est de l'eau du robinet ;
- la fréquence de pilotage est égale à 5kHz lorsque le liquide de nébulisation L est de l'eau distillée ;
- la fréquence de pilotage est inférieure à 5kHz lorsque le liquide de nébulisation L est de l'eau pure.

On notera que plus la fréquence de modulation des transistors S1, S2, S3, S4 est grande, plus l'effet capacitif du liquide de nébulisation L diminue.

• Amplificateur opérationnel

Tel qu'illustré sur les figures 1, 6 et 8, L'amplificateur opérationnel 50 est relié au double demi-pont en H et comporte comme tension d'entrée, la tension de référence Vref décrite précédemment.

La tension d'entrée Vref de l'amplificateur opérationnel 50 se retrouve aux bornes de la cellule de conductivité 30. On a donc U=Vref.

L'amplificateur opérationnel 50 est un amplificateur non inverseur. Il permet ensemble avec le double demi-pont en H 40 d'amplifier la tension U aux bornes de la cellule de conductivité 30.

L'amplificateur opérationnel 50 comprend :

- une résistance de gain R2 adaptée pour amplifier la tension d'entrée Vref ;
- une tension d'alimentation V1 ;
- une tension de sortie Vout

Comme décrit ci-après, en mesurant la tension de sortie Vout qui est fonction de l'impédance R1 du liquide de nébulisation L, on détermine la conductivité σ du liquide de nébulisation L.

Dans un mode de réalisation non limitatif, la tension d'alimentation V1 est comprise entre 3 Volts et 24 Volts. Dans une variante de réalisation non limitative, la tension d'alimentation V1 est égale à 12 Volts.

Dans un exemple non limitatif, dans le cadre d'une application pour véhicule automobile, la tension d'alimentation V1 est fournie par une batterie du véhicule automobile V (non illustré).

La tension de sortie Vout de l'amplificateur opérationnel 50 est fonction de la tension d'entrée Vref, de la résistance de gain R et de l'impédance R1 mesurée au moyen de la cellule de conductivité 30.

Ainsi, on a la formule suivante :

$$Vout = Vref * \left(1 + \frac{R2}{R1}\right)$$

avec :

$$\sigma . R1 = \frac{D}{S}$$

La tension de sortie Vout varie ainsi en fonction de l'impédance R1.

On obtient :

$$\sigma = \frac{D * (Vout - Vref)}{S . R2 . Vref}$$

soit :

$$\rho = \frac{S.R2.Vref}{D * (Vout - Vref)}$$

Ainsi, en mesurant la tension de sortie Vout de l'amplificateur opérationnel 50, on peut en déduire la conductivité σ du liquide de nébulisation L (ou sa résistivité ρ), lorsque ce dernier est présent dans l'unité de nébulisation 10.

En comparant la tension de sortie Vout mesurée avec :

- la tension de référence Vref ; et/ou
- une tension seuil Vs correspondant à une conductivité déterminée σd, on peut savoir respectivement :
- s'il y a encore du liquide de nébulisation L dans l'unité de nébulisation 10 ; et/ou
- quelle est la qualité du liquide de nébulisation L.

Ainsi, soit l'impédance R1 est une impédance R1 du liquide de nébulisation L et la tension de sortie Vout est représentative d'une conductivité σ dudit liquide de nébulisation L, soit l'impédance R1 tend vers l'infini et la tension de sortie Vout est représentative de l'absence de liquide de nébulisation L dans ladite unité de nébulisation 10.

Ainsi, dans un mode de réalisation non limitatif, tel qu'illustré sur la figure 6, le dispositif de rafraîchissement d'air 10 comprend en outre en sortie dudit amplificateur opérationnel 50 un comparateur de tension 60 adapté pour comparer la tension de sortie Vout dudit amplificateur opérationnel 50 avec

- la tension de référence Vref ;

- une tension seuil Vs correspondant à une conductivité déterminée $\sigma_d$ du liquide de nébulisation L.

On choisit la tension seuil Vs en fonction de la conductivité déterminée σd avec laquelle on veut comparer la conductivité σ du liquide de nébulisation L. Dans un mode de réalisation non limitatif, la conductivité déterminée σd est supérieure à 1000μS/cm. Au-delà de cette valeur de 1000μS/cm, un liquide de nébulisation L est considéré comme étant de mauvaise qualité pour rafraîchir l'habitacle du véhicule automobile V.

Dans une variante de réalisation non limitative, le comparateur de tension 60 est un comparateur à hystérésis.

Si la tension mesurée Vout oscille au niveau de la tension seuil Vs choisie, et plus particulièrement entre une première valeur haute et une deuxième valeur basse, cela permet de ne pas changer l'action effectuée sur le liquide de nébulisation L de façon intempestive (arrêt ou non de la nébulisation du liquide de nébulisation L). Un comparateur à hystérésis étant connu de l'homme du métier, il n'est pas décrit ici.

Dans des modes de réalisation non limitatifs, le comparateur de tension 60 comprend :

- un convertisseur analogique numérique et un microcontrôleur, ledit microcontrôleur effectuant la fonction de comparaison et la fonction d'arrêt de la nébulisation (décrite ci-dessous) ;
- un ou plusieurs comparateurs hardware qui effectuent la fonction de comparaison, tel que dans un exemple non limitatif un amplificateur opérationnel comparateur. Dans ce cas, un microcontrôleur complémentaire effectue la fonction d'arrêt de la nébulisation (décrite ci-dessous) ;
- un ou plusieurs comparateurs hardware qui effectuent la fonction de comparaison et la fonction d'arrêt de la nébulisation, tel que dans un exemple non limitatif un amplificateur opérationnel comparateur.

En fonction du résultat de la comparaison, le dispositif de rafraîchissement d'air par nébulisation 1 est adapté pour arrêter la nébulisation de liquide de nébulisation L, et donc d'arrêter la distribution des fines gouttelettes dans ledit habitacle du véhicule automobile V :

- s'il n'y a plus de liquide de nébulisation L dans ladite unité de nébulisation 10 ; ou

- si le liquide de nébulisation L comporte une conductivité σ supérieure à la conductivité déterminée $\sigma_d$.

Autrement dit, le dispositif de rafraîchissement d'air par nébulisation 1 est adapté pour arrêter la nébulisation du liquide de nébulisation L :

- si la tension Vout est inférieure ou égale à la tension de référence Vref (il n'y a plus de liquide de nébulisation L) ; ou
- si la tension Vout est supérieure à la tension seuil Vs (le liquide de nébulisation est de mauvaise qualité).

Des moyens d'alerte (non illustrés) couplés au dispositif de rafraîchissement d'air par nébulisation 1 peuvent prévenir de l'arrêt de la nébulisation. On peut ainsi soit remplir l'unité de nébulisation 10 avec un nouveau liquide de nébulisation (ou un réservoir couplé à ladite unité de nébulisation 10 dans le cas où celle-ci est un conduit), soit changer ledit liquide de nébulisation avec un autre de meilleure qualité.

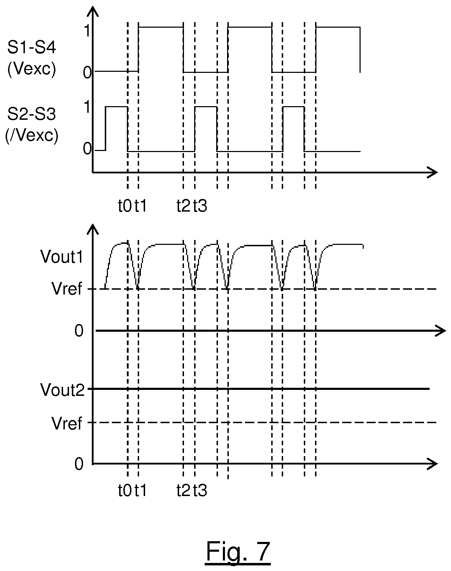

La figure 7 reprend les diagrammes de temps de la figure 5 avec un diagramme de temps complémentaire représentant en parallèle l'évolution de la tension de sortie de l'amplificateur opérationnel 50 avec ou sans condensateur supplémentaire.

Tel qu'illustré sur la figure 7, dans les intervalles de temps t0-t1 et t2-t3 dans lesquels les transistors S1, S2, S3 et S4 sont ouverts, l'impédance R1 est infinie. Selon la formule vue précédemment Vout=Vref*(1+R2/R1), la tension de sortie Vout (ici référencée Vout1) de l'amplificateur opérationnel 50 redevient égale à la tension de référence Vref de l'amplificateur opérationnel 50. L'amplificateur devient un amplificateur suiveur.

En conséquence, pour mesurer la tension de sortie Vout qui est réellement représentative de la conductivité σ du liquide de nébulisation L, dans un premier mode de réalisation non limitatif, on échantillonne la tension de sortie Vout à des temps déterminés qui ne sont pas compris dans les intervalles de temps t0-t1 et t2-t3 vus précédemment, par exemple à chaque demie période. Dans un mode de réalisation non limitatif, l'échantillonnage est effectué par un microcontrôleur.

Dans un deuxième mode de réalisation non limitatif tel qu'illustré sur la figure 6, le dispositif de rafraîchissement d'air 10 comprend en sortie dudit amplificateur opérationnel 50 un condensateur 70 adapté pour lisser la tension de sortie Vout dudit amplificateur opérationnel 50. Ainsi, on obtient une tension de sortie Vout lissée (référencée Vout2 sur la figure 7). Il n'est plus nécessaire d'échantillonner ladite tension de sortie Vout. La mesure peut se faire à n'importe quel instant.

Comme vu précédemment, la conductivité σ du liquide de nébulisation L dépend de la concentration des ions dans le liquide de nébulisation L.

Par ailleurs, la conductivité σ dépend également de la température du liquide de nébulisation L. Si la température augmente, la conductivité σ augmente également.

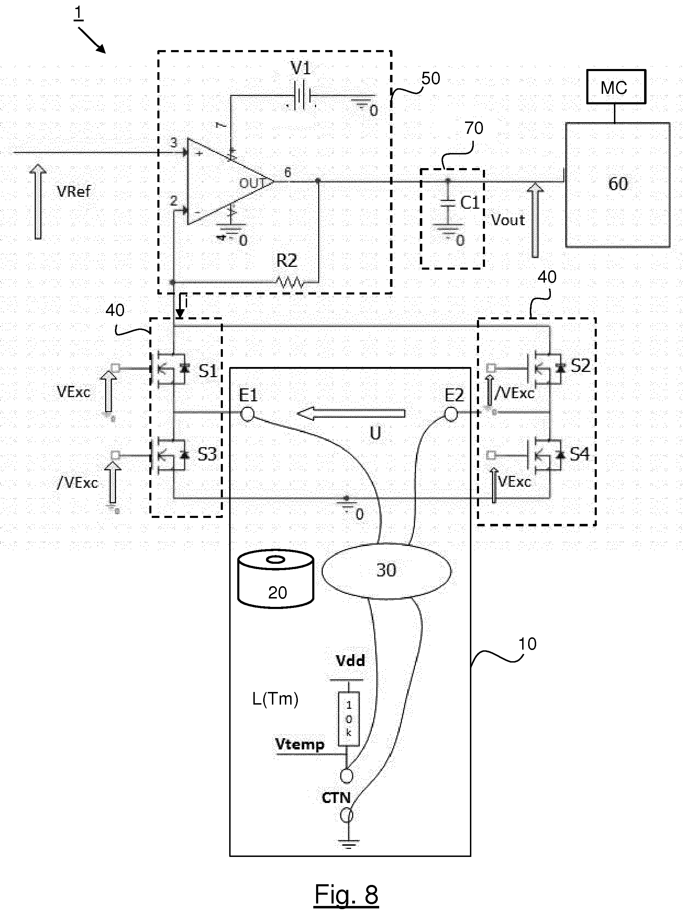

Pour être comparables entre elles, les mesures de conductivité sont souvent ramenées à une température de référence Tref, en général 20 °C ou 25 °C. Aussi, tel qu'illustré sur la figure 8, dans un mode de réalisation non limitatif, ledit dispositif de rafraîchissement d'air 10 comprend en outre :

- un capteur de température CTN disposé aux bornes des deux électrodes E1, E2 de ladite cellule de conductivité 30 et adapté pour fournir une température réelle Tm du liquide de nébulisation L. La température Tm est la température réelle du liquide de nébulisation L ;
- des moyens de correction MC (tels qu'illustrés sur les figures 6 et 8) de la conductivité mesurée σ pour ramener la conductivité mesurée σ à la température de référence Tref. Dans un mode de réalisation non limitatif, les moyens de correction sont un microcontrôleur. Dans le cas où le comparateur de tension 60 comprend un microcontrôleur, la fonction de correction de la conductivité mesurée σ peut être effectuée par ce microcontrôleur. A ce moment, les moyens de corrections sont référencés 60 sur les figures 6 et 8, la référence MC étant dans ce cas supprimée.

Dans un mode de réalisation non limitatif, la conductivité mesurée σ à la température réelle Tm du liquide de nébulisation L est ramenée à 25°C (nouvelle valeur de conductivité σ25) à l'aide d'une approximation linéaire de 2% par °C sur la résistivité ρ qui est la suivante :

$$\rho(25°C) = \rho\,(1+0.02*(Tm-25)),$$ avec ρ(25°C) la résistivité du liquide de nébulisation L compensée en température (Ω.cm@25°C).

Bien entendu la description de l'invention n'est pas limitée aux modes de réalisation décrits ci-dessus.

Ainsi, dans d'autres modes de réalisation non limitatifs non illustrés, le dispositif de rafraîchissement d'air par nébulisation peut comporter en outre le comparateur 60 sans le condensateur 70, ou le comparateur 60 sans le condensateur 70 mais avec le capteur de température CTN.

Ainsi, dans un autre mode de réalisation non limitatif, les transistors S1, S2, S3, S4 du double demi-pont en H 40 sont des transistors bipolaires.

Ainsi, dans un autre mode de réalisation non limitatif, la conductivité mesurée σ à la température réelle Tm du liquide de nébulisation L est ramenée à 25°C (nouvelle valeur de conductivité σ25) à l'aide d'une équation qui est la suivante : σ25 = f25(T)*σ, avec f25(T) un facteur de correction de température calculé selon une équation décrite dans la norme ISO/DIN/7888 (applicable aux eaux naturelles).

Ainsi, dans un mode de réalisation non limitatif, en fonction du résultat de la comparaison, le dispositif de rafraîchissement d'air par nébulisation 1 est adapté pour redémarrer la nébulisation de liquide de nébulisation L, et donc la distribution des fines gouttelettes dans ledit habitacle du véhicule automobile V :

- en présence du liquide de nébulisation L ; et
- si le liquide de nébulisation L comporte une conductivité σ inférieure à la conductivité déterminée $\sigma_d$.

Autrement dit, le dispositif de rafraîchissement d'air par nébulisation 1 est adapté pour redémarrer la nébulisation du liquide de nébulisation L :

- si la tension de sortie Vout est supérieure à la tension d'entrée Vref (il y a de nouveau du liquide de nébulisation L) ; et
- si la tension de sortie Vout est inférieure à la tension seuil Vs correspondant à une conductivité déterminée $\sigma_d$ du liquide de nébulisation L (le liquide de nébulisation est de bonne qualité).

Ainsi, l'invention décrite présente notamment les avantages suivants :

- c'est une solution simple à mettre en oeuvre et peu coûteuse ;
- elle permet de détecter la présence ou l'absence d'un liquide de nébulisation L dans l'unité de nébulisation.
- elle permet de mesurer et de contrôler la dégradation du liquide de nébulisation.

- elle permet une mesure indirecte de l'impédance R1 du liquide de nébulisation L au moyen de la tension de sortie Vout de l'amplificateur opérationnel.

**Revendications**

1. Dispositif de rafraîchissement d'air par nébulisation (1) pour véhicule automobile (V), selon lequel le dispositif de rafraîchissement d'air (1) comprend :

   - une unité de nébulisation (10) adaptée pour recevoir un liquide de nébulisation (L);
   - un nébuliseur (20) couplé à ladite unité de nébulisation (10) ;
   - une cellule de conductivité (30) comprenant deux électrodes (E1, E2) disposées dans ladite unité de nébulisation (10) et permettant une mesure d'impédance (R1);
   - **caractérisé en ce que** le dispositif comprend un double demi-pont en H (40) composé d'une pluralité de transistors (S1, S2, S3, S4) et relié à ladite cellule de conductivité (30), ledit double demi-pont en H (40) étant adapté pour alimenter ladite cellule de conductivité (30) avec un courant d'alimentation (i) alternatif ; et
   - un amplificateur opérationnel (50) relié audit double demi-pont en H (40) et comportant une tension d'entrée (Vref), ledit amplificateur opérationnel (50) étant adapté pour fournir une tension de sortie (Vout) fonction de ladite tension d'entrée (Vref) et de ladite impédance (R1).

2. Dispositif de rafraîchissement d'air par nébulisation (1) selon la revendication 1, selon lequel l'impédance (R1) est une impédance (R1) du liquide de nébulisation (L) et la tension de sortie (Vout) est représentative d'une conductivité ($\sigma$) dudit liquide de nébulisation (L).

3. Dispositif de rafraîchissement d'air par nébulisation (1) selon la revendication 1, selon lequel l'impédance (R1) tend vers l'infini et la tension de sortie (Vout) est représentative de l'absence de liquide de nébulisation (L) dans ladite unité de nébulisation (10).

4. Dispositif de rafraîchissement d'air par nébulisation (1) selon l'une quelconque des revendications 1 à 3, selon lequel les transistors (S1, S2, S3, S4) du double demi-pont en H (40) sont pilotés avec une tension de commande (VExc, /VExc) et comportent une tension seuil (Vgs), et ladite tension d'entrée (Vref) est inférieure à ladite tension de commande (VExc) moins ladite tension seuil (Vgs).

5. Dispositif de rafraîchissement d'air par nébulisation (1) selon l'une quelconque des revendications 1 à 4, selon lequel ladite tension d'entrée (Vref) est inférieure à 1,3 Volts.

6. Dispositif de rafraîchissement d'air par nébulisation (1) selon l'une quelconque des revendications 1 à 5, selon lequel la tension de commande (VExc) des transistors (S1, S2, S3, S4) est comprise entre 3,3 Volts et 12 Volts.

7. Dispositif de rafraîchissement d'air par nébulisation (1) selon la revendication précédente 6, selon lequel la tension de commande (VExc) est égale à 3,3 Volts.

8. Dispositif de rafraîchissement d'air par nébulisation (1) selon l'une quelconque des revendications 1 à 7, selon lequel les transistors (S1, S2, S3, S4) du double demi-pont en H (40) sont des transistors MOSFET.

9. Dispositif de rafraîchissement d'air par nébulisation (1) selon l'une quelconque des revendications 1 à 8, selon lequel ledit dispositif de rafraîchissement d'air (10) comprend en outre en sortie dudit amplificateur opérationnel (50) un comparateur de tension (60) adapté pour comparer la tension de sortie (Vout) dudit amplificateur opérationnel (50) avec :

   - ladite tension d'entrée (Vref) ; et/ou
   - une tension seuil (Vs) correspondant à une conductivité déterminée ($\sigma_d$) du liquide de nébulisation (L).

10. Dispositif de rafraîchissement d'air par nébulisation (1) selon la revendication précédente 9, selon lequel ledit dispositif de rafraîchissement d'air par nébulisation (1) est adapté pour arrêter la nébulisation du liquide de nébulisation (L) :

    - si la tension de sortie (Vout) est inférieure ou égale à la tension de référence (Vref) ; ou
    - si la tension de sortie (Vout) est supérieure à la tension seuil (Vs) correspondant à la conductivité déterminée ($\sigma d$) du liquide de nébulisation (L).

11. Dispositif de rafraîchissement d'air par nébulisation (1) selon la revendication 9 ou la revendication 10, selon lequel la conductivité déterminée ($\sigma_d$) est supérieure à 1000 $\mu$S/cm.

12. Dispositif de rafraîchissement d'air (10) selon l'une quelconque des revendications 9 à 11, selon lequel ledit comparateur de tension (60) est un comparateur à hystérésis.

13. Dispositif de rafraîchissement d'air par nébulisation (1) selon l'une quelconque des revendications 1 à 12, selon lequel ledit dispositif de rafraîchissement d'air (10) comprend en outre en sortie dudit amplificateur opérationnel (50) un condensateur (70) adapté pour lisser la tension de sortie (Vout) dudit amplificateur opérationnel (50).

14. Dispositif de rafraîchissement d'air par nébulisation (1) selon l'une quelconque des revendications 1 à 13, selon lequel ledit dispositif de rafraîchissement d'air (10) comprend en outre un capteur de température (CTN) disposé aux bornes des deux électrodes (E1, E2) de ladite cellule de conductivité (30) et adapté pour fournir une température réelle (Tm) du liquide de nébulisation (L).

15. Dispositif de rafraîchissement d'air par nébulisation (1) selon l'une quelconque des revendications 1 à 14, selon lequel ladite unité de nébulisation (10) est :

- un réservoir de nébulisation ; ou
- un conduit de nébulisation dans lequel le liquide de nébulisation (L) peut s'écouler.

## Patentansprüche

1. Vorrichtung zur Lufterfrischung durch Zerstäubung (1) für ein Kraftfahrzeug (V), wobei die Vorrichtung zur Lufterfrischung (1) umfasst:

- eine Zerstäubungseinheit (10), die dafür ausgelegt ist, eine Zerstäubungsflüssigkeit (L) aufzunehmen;
- einen Zerstäuber (20), der mit der Zerstäubungseinheit (10) gekoppelt ist;
- eine Leitfähigkeitszelle (30), welche zwei Elektroden (E1, E2) umfasst, die in der Zerstäubungseinheit (10) angeordnet sind und eine Messung einer Impedanz (R1) ermöglichen; **dadurch gekennzeichnet, dass** die Vorrichtung umfasst:
- eine H-förmige Doppelhalbbrücke (40), die aus mehreren Transistoren (S1, S2, S3, S4) besteht und mit der Leitfähigkeitszelle (30) verbunden ist, wobei die H-förmige Doppelhalbbrücke (40) dafür ausgelegt ist, die Leitfähigkeitszelle (30) mit einem Speisewechselstrom (i) zu versorgen; und
- einen Operationsverstärker (50), der mit der H-förmigen Doppelhalbbrücke (40) verbunden ist und eine Eingangsspannung (Vref) aufweist, wobei der Operationsverstärker (50) dafür ausgelegt ist, eine Ausgangsspannung (Vout) zu liefern, die von der Eingangsspannung (Vref) und von der Impedanz (R1) abhängig ist.

2. Vorrichtung zur Lufterfrischung durch Zerstäubung (1) nach Anspruch 1, wobei die Impedanz (R1) eine Impedanz (R1) der Zerstäubungsflüssigkeit (L) ist und die Ausgangsspannung (Vout) für eine Leitfähigkeit ($\sigma$) der Zerstäubungsflüssigkeit (L) repräsentativ ist.

3. Vorrichtung zur Lufterfrischung durch Zerstäubung (1) nach Anspruch 1, wobei die Impedanz (R1) gegen unendlich strebt und die Ausgangsspannung (Vout) für das Nichtvorhandensein von Zerstäubungsflüssigkeit (L) in der Zerstäubungseinheit (10) repräsentativ ist.

4. Vorrichtung zur Lufterfrischung durch Zerstäubung (1) nach einem der Ansprüche 1 bis 3, wobei die Transistoren (S1, S2, S3, S4) der H-förmigen Doppelhalbbrücke (40) mit einer Steuerspannung (VExc, /VExc) vorgesteuert werden und eine Schwellenspannung (Vgs) aufweisen und die Eingangsspannung (Vref) kleiner als die Steuerspannung (VExc) abzüglich der Schwellenspannung (Vgs) ist.

5. Vorrichtung zur Lufterfrischung durch Zerstäubung (1) nach einem der Ansprüche 1 bis 4, wobei die Eingangsspannung (Vref) kleiner als 1,3 Volt ist.

6. Vorrichtung zur Lufterfrischung durch Zerstäubung (1) nach einem der Ansprüche 1 bis 5, wobei die Steuerspannung (VExc) der Transistoren (S1, S2, S3, S4) zwischen 3,3 Volt und 12 Volt liegt.

7. Vorrichtung zur Lufterfrischung durch Zerstäubung (1) nach dem vorhergehenden Anspruch 6, wobei die Steuerspannung (VExc) 3,3 Volt beträgt.

8. Vorrichtung zur Lufterfrischung durch Zerstäubung (1) nach einem der Ansprüche 1 bis 7, wobei die Transistoren (S1, S2, S3, S4) der H-förmigen Doppelhalbbrücke (40) MOSFET-Transistoren sind.

9. Vorrichtung zur Lufterfrischung durch Zerstäubung (1) nach einem der Ansprüche 1 bis 8, wobei die Vorrichtung zur Lufterfrischung (10) außerdem am Ausgang des Operationsverstärkers (50) einen Spannungskomparator (60) aufweist, der dafür ausgelegt ist, die Ausgangsspannung (Vout) des Operationsverstärkers (50) zu vergleichen mit:

- der Eingangsspannung (Vref); und/oder
- einer Schwellenspannung (Vs), die einer bestimmten Leitfähigkeit ($\sigma_d$) der Zerstäubungsflüssigkeit (L) entspricht.

10. Vorrichtung zur Lufterfrischung durch Zerstäubung (1) nach dem vorhergehenden Anspruch 9, wobei die Vorrichtung zur Lufterfrischung durch Zerstäubung (1) dafür ausgelegt ist, die Zerstäubung der Zerstäubungsflüssigkeit (L) zu stoppen:

- falls die Ausgangsspannung (Vout) kleiner oder gleich der Referenzspannung (Vref) ist;

oder

- falls die Ausgangsspannung (Vout) größer als die Schwellenspannung (Vs) ist, die der bestimmten Leitfähigkeit ($\sigma_d$) der Zerstäubungsflüssigkeit (L) entspricht.

11. Vorrichtung zur Lufterfrischung durch Zerstäubung (1) nach Anspruch 9 oder Anspruch 10, wobei die bestimmte Leitfähigkeit ($\sigma_d$) größer als 1000 $\mu$S/cm ist.

12. Vorrichtung zur Lufterfrischung (10) nach einem der Ansprüche 9 bis 11, wobei der Spannungskomparator (60) ein Komparator mit Hysterese ist.

13. Vorrichtung zur Lufterfrischung durch Zerstäubung (1) nach einem der Ansprüche 1 bis 12, wobei die Vorrichtung zur Lufterfrischung (10) außerdem am Ausgang des Operationsverstärkers (50) einen Kondensator (70) aufweist, der dafür ausgelegt ist, die Ausgangsspannung (Vout) des Operationsverstärkers (50) zu glätten.

14. Vorrichtung zur Lufterfrischung durch Zerstäubung (1) nach einem der Ansprüche 1 bis 13, wobei die Vorrichtung zur Lufterfrischung (10) außerdem einen Temperatursensor (CTN) umfasst, der an den Klemmen der zwei Elektroden (E1, E2) der Leitfähigkeitszelle (30) angeordnet ist und dafür ausgelegt ist, eine Ist-Temperatur (Tm) der Zerstäubungsflüssigkeit (L) zu liefern.

15. Vorrichtung zur Lufterfrischung durch Zerstäubung (1) nach einem der Ansprüche 1 bis 14, wobei die Zerstäubungseinheit (10):

- ein Zerstäubungsbehälter ist; oder
- eine Zerstäubungsleitung ist, in welcher die Zerstäubungsflüssigkeit (L) fließen kann.

**Claims**

1. Device for freshening air by atomization (1) for a motor vehicle (V), according to which the device for freshening air (1) comprises:

- an atomization unit (10) suitable for receiving an atomization liquid (L);
- an atomizer (20) coupled to said atomization unit (10) ;
- a conductivity cell (30) which comprises two electrodes (E1, E2) arranged in said atomization unit (10) and enables an impedance (R1) to be measured;
- **characterized in that** the device comprises a H-shaped double half-bridge (40) consisting of a plurality of transistors (S1, S2, S3, S4) and connected to said conductivity cell (30), said H-shaped double half-bridge (40) being suitable for supplying said conductivity cell (30) with an alternating supply current (i); and
- an operational amplifier (50) connected to said H-shaped double half-bridge (40) and including an input voltage (Vref), said operational amplifier (50) being suitable for providing an output voltage (Vout) as a function of said input voltage (Vref) and of said impedance (R1).

2. Device for freshening air by atomization (1) according to Claim 1, according to which the impedance (R1) is an impedance (R1) of the atomization liquid (L) and the output voltage (Vout) represents a conductivity ($\sigma$) of said atomization liquid (L).

3. Device for freshening air by atomization (1) according to Claim 1, according to which the impedance (R1) tends to infinity and the output voltage (Vout) represents the absence of atomization liquid (L) in said atomization unit (10).

4. Device for freshening air by atomization (1) according to any one of claims 1 to 3, according to which the transistors (S1, S2, S3, S4) of the H-shaped double half-bridge (40) are driven with a control voltage (VExc, /VExc) and including a threshold voltage (Vgs), and said input voltage (Vref) is less than said control voltage (VExc) less said threshold voltage (Vgs).

5. Device for freshening air by atomization (1) according to any one of Claims 1 to 4, according to which said input voltage (Vref) is less than 1.3 Volts.

6. Device for freshening air by atomization (1) according to any one of Claims 1 to 5, according to which the control voltage (VExc) for the transistors (S1, S2, S3, S4) is between 3.3 Volts and 12 Volts.

7. Device for freshening air by atomization (1) according to Claim 6, according to which the control voltage (VExc) is equal to 3.3 Volts.

8. Device for freshening air by atomization (1) according to any one of Claims 1 to 7, according to which the transistors (S1, S2, S3, S4) of the H-shaped double half-bridge (40) are MOSFET transistors.

9. Device for freshening air by atomization (1) according to any one of Claims 1 to 8, according to which said device for freshening air (10) further comprises, at the output of said operational amplifier (50), a voltage comparator (60) suitable for comparing the output voltage (Vout) of said operational amplifier (50) with:

- said input voltage (Vref); and/or
- a threshold voltage (Vs) corresponding to a determined conductivity ($\sigma_d$) of the atomization liquid (L).

10. Device for freshening air by atomization (1) according to preceding Claim 9, according to which said device for freshening air by atomization (1) is suitable for stopping the atomization of the atomization liquid (L):

- if the output voltage (Vout) is less than or equal to the reference voltage (Vref); or
- if the output voltage (Vout) is greater than the threshold voltage (Vs) corresponding to the determined conductivity ($\sigma_d$) of the atomization liquid (L).

11. Device for freshening air by atomization (1) according to Claim 9 or Claim 10, according to which the determined conductivity ($\sigma_d$) is greater than 1000 $\mu$S/cm.

12. Device for freshening air (10) according to any one of Claims 9 to 11, according to which said voltage comparator (60) is a hysteresis comparator.

13. Device for freshening air by atomization (1) according to any one of Claims 1 to 12, according to which said device for freshening air (10) further comprises, at the output of the operational amplifier (50), a capacitor (70) suitable for smoothing the output voltage (Vout) of said operational amplifier (50).

14. Device for freshening air by atomization (1) according to any one of Claims 1 to 13, according to which said device for freshening air (10) further comprises a temperature detecting element (CTN) arranged at the terminals of the two electrodes (E1, E2) of said conductivity cell (30) and suitable for providing an actual temperature (Tm) of the atomization liquid (L).

15. Device for freshening air by atomization (1) according to any one of Claims 1 to 14, according to which said atomization unit (10) is:

- an atomization tank; or
- an atomization duct in which the atomization liquid (L) can flow.

<u>Fig. 1</u>

30

Fig. 2

40

40

S1    S2

U=Vref

i

R1

S3    S4

-
0V

S1    S2

U=Vref

i

R1

S3    S4

-
0V

Fig. 3          Fig. 4

Fig. 5

Fig. 6

Fig. 7

_Fig. 8_

## RÉFÉRENCES CITÉES DANS LA DESCRIPTION

**Documents brevets cités dans la description**

- JP 2003117555 A